# EUROPÄISCHE PATENTANMELDUNG

(11) **EP 1 148 073 A1**
(43) Veröffentlichungstag der Anmeldung: **24.10.2001**
(21) Anmeldenummer: 01107841.7
(22) Anmeldetag: 09.04.2001
(51) Int. Cl.: C08F 279/02

(54) **Neue Schlagzähmodifier auf Basis von (teil)hydrierten butadienhaltigen Dispersionen**

(30) Priorität: 18.04.2000 DE 10019215
(71) Anmelder: BASF AKTIENGESELLSCHAFT, 67056 Ludwigshafen (DE)
(72) Erfinder: Barghoorn, Peter, Dr., 67169 Kallstadt (DE); Schädler, Volker, Dr., 68163 Mannheim (DE); Maas, Heiko, Dr., 68165 Mannheim (DE); Niessner, Norbert, Dr., 67159 Friedelsheim (DE)
(74) Vertreter: Isenbruck, Günter, Dr.

(57) **Zusammenfassung**

Die Erfindung betrifft ein Verfahren zur Herstellung von Pfropfkautschuken, aufgebaut aus mindestens einem Pfropfkern und mindestens einer Pfropfschale, umfassend
a) Herstellung einer wäßrigen Dispersion mindestens eines kautschukelastischen Polymerisats.
b) anschließende selektive Hydrierung von ethylenisch ungesättigten Doppelbindungen in dem kautschukelastischen Polymerisat mit Wasserstoff in Gegenwart mindestens eines Hydrierkatalysators, wobei die wäßrige Dispersion des käutschukelastischen Polymerisats nicht mehr als 20 Vol.-% eines organischen Lösungsmittels enthält, zur Gewinnung des mindestens einen Pfropfkerns, und
c) Aufpfropfen mindestens einer Pfropfschale auf den Pfropfkern,
sowie die entsprechenden Pfropfkautschuke.

Weiterhin betrifft die Erfindung Abmischungen enthaltend
a) 2 bis 70 Gew.-% eines erfindungsgemäßen Pfropfkautschuks als Komponente A,
b) 30 bis 98 Gew.-% eines thermoplastischen Polymeren oder einer Mischung verschiedener thermoplastischer Polymere, als Komponente B,
c) 0 bis 50 Gew.-% weiterer Zusatzstoffe als Komponente C,
wobei die Summe der Komponenten A bis C 100 Gew.-%, bezogen auf die Abmischung, beträgt.

## Beschreibung

Die Erfindung betrifft ein Verfahren zur Herstellung von Pfropfkautschuken auf Basis von (teil)hydrierten dienhaltigen Dispersionen, einen Pfropfkautschuk herstellbar nach diesem Verfahren, die Verwendung dieses Pfropfkautschuks als Schlagzähmodifier in thermoplastischen Abmischungen, Abmischungen enthaltend diesen Pfropfkautschuk und ein Verfahren zu ihrer Herstellung sowie die Verwendung der Abmischungen.

Polymere Materialien werden in zahlreichen verschiedenen Anwendungen eingesetzt, beispielsweise im Automobilbereich, als Material für Rohrleitungen, als Isolatoren für Stromleitungen und als Schutzanstrich. Für Anwendungen in diesen Bereichen ist es erforderlich, daß die polymeren Materialien ihre vorteilhaften mechanischen und physikalischen Eigenschaften über einen möglichst langen Zeitraum auch unter extremen Umwelteinflüssen behalten. Insbesondere polymere Materialien, die reaktive C-C-Doppelbindungen enthalten sind sehr empfindlich gegenüber einer oxidativen Zersetzung, was zu einer strukturellen Instabilität dieser polymeren Materialien führt.

Beispielsweise werden bei den sogenannten ABS (Acrylnitril-Butadien-Styrol)-Polymerisaten Pfropfkautschuke auf Dien-Basis als Kautschuk zur Schlagzähmodifizierung verwendet. Die erhaltenen Produkte besitzen eine gute Schlagzähigkeit, jedoch ist ihre Witterungs- und Alterungsbeständigkeit relativ gering. Will man nicht nur schlagfeste, sondern gleichzeitig auch witterungs- und alterungsbeständige Polymerisate erhalten, müssen als Kautschuk zur Schlagzähmodifizierung gesättigte Kautschuke eingesetzt werden. Dabei haben sich insbesondere die kautschukelastischen, bevorzugt vernetzten Acrylsäureester-Polymerisate als geeignet erwiesen. Die entsprechenden Formmassen werden ASA (Acrylnitril-Styrol-Acrylsäureester)-Polymerisate genannt.

Nachteilig bei dem Einsatz von Acrylsäureester-Polymerisaten als Schlagzähmodifiern gegenüber Dien-Polymerisaten ist der höhere Preis der als Monomere eingesetzten Acrylsäureester gegenüber Dienen und die geringere Kältezähigkeit.

DE-A 31 49 046 betrifft witterungsbeständige thermoplastische Formmassen, aufgebaut aus einer zweiteiligen Elastomerphase, die einen Kern aus einem Polybutadien-Kautschuk aufweist und eine Schale aus einem Polyacrylat-Kautschuk. Darauf ist eine Pfropfhülle aus einer Hartkomponente auf Basis eines Styrolcopolymeren aufgepfropft. Diese Formmassen enthalten jedoch neben einem Butadien-Kautschuk teuren Polyacrylat-Kautschuk.

US 4,452,950 betrifft ein Verfahren zur Herstellung von polymerem Material, das eine größere Stabilität gegenüber einem oxidativen oder thermischen Abbau aufweist. Diese erhöhte Stabilität wird dadurch erreicht, daß ungesättigte Polymere, die C-C-Doppelbindungen aufweisen, im Anschluß an ihre Herstellung in wäßriger Dispersion (Latex) mit Hydrazin oder Hydraten davon hydriert werden. Die Hydrierung mit Hydrazin ist jedoch problematisch, da Hydrazin toxisch ist. Aus diesem Grund betrifft US 5,068,313 ein Verfahren zur Minimierung von Hydrazinresten in Poymerdispersionen. Somit kann zwar die Hydrazinmenge auf ein Minimum gesenkt werden, jedoch ist dazu ein sich an die Hydrierung anschließendes zweistufiges Verfahren notwendig.

US 4,469,849 betrifft ein Verfahren zur vollständigen oder teilweisen Hydrierung von ABS-Polymerisaten mit Wasserstoff in Anwesenheit eines Katalysators. Dabei wird zunächst eine im allgemeinen wäßrige Emulsion des zu hydrierenden ABS-Polymerisats hergestellt, und dieses wird anschließend hydriert, wobei der Hydrierkatalysator in einem mit Wasser nicht mischbaren Lösungsmittel gelöst wird, das gleichzeitig dazu dient, das Polymerisat aufzuquellen, um dem Katalysator den Zugang zu den zu hydrierenden Doppelbindungen zu erleichtern. Es wird soviel Lösungsmittel zugegeben, daß ein Zweiphasengemisch erhalten wird, wobei eine Phase den Katalysator und die andere Phase das (teil)hydrierte ABS-Polymerisat enthält. Nach Trennung der Phasen wird eine Emulsion des (teil)hydrierten ABS-Polymerisats erhalten.

DE-A 197 53 302 betrifft ein Verfahren zur selektiven Hydrierung von C-C-Doppelbindungen in Polymerisaten. Dazu wird die Dispersion eines Polymerisats, die nicht mehr als 20 Vol.-% eines organischen Lösungsmittels enthält, mit Wasserstoff in Gegenwart eines Hydrierkatalysators umgesetzt. Die Herstellung von Pfropfkautschuken, die als Schlagzähmodifier in thermoplastischen Abmischungen eingesetzt werden, ist nicht offenbart.

Aufgabe der vorliegenden Erfindung ist die Bereitstellung eines einfach durchführbaren und preiswerten Verfahrens zur Herstellung von Pfropfkautschuken auf Dienbasis, die als Schlagzähmodifier geeignet sind und eine hohe Beständigkeit gegenüber Umwelteinflüssen aufweisen, sowie die Bereitstellung der entsprechenden Pfropfkautschuke, die sich durch gute mechanische Eigenschaften und eine hohe Beständigkeit gegenüber Umwelteinflüssen, z. B. bezüglich Farbveränderungen, auszeichnen.

Diese Aufgabe wird durch ein Verfahren zur Herstellung von Pfropfkautschuken, aufgebaut aus mindestens einem Pfropfkern und mindestens einer Pfropfschale, gelöst, umfassend
a) Herstellung einer wäßrigen Dispersion mindestens eines kautschukelastischen Polymerisats aufgebaut aus
   - mindestens einem konjugierten Dien,
   - gegebenenfalls mindestens einem mit dem Dien copolymerisierbaren Monomer,
   - gegebenenfalls mindestens einem modifizierenden Monomer,
b) anschließende selektive Hydrierung von ethylenisch ungesättigten Doppelbindungen in dem kautschukelastischen Polymerisat mit Wasserstoff in Gegenwart mindestens eines Hydrierkatalysators, ausgewählt aus Salzen und Komplexverbindungen des Rhodiums und/oder Rutheniums, wobei die wäßrige Dispersion des kautschukelastischen Polymerisats nicht mehr als 20 Vol.-% eines organischen Lösungsmittels enthält, zur Gewinnung des Pfropfkerns, und
c) Aufpfropfen mindestens einer Pfropfschale auf den Pfropfkern aufgebaut aus
   - mindestens einer Styrolverbindung der allgemeinen Formel I 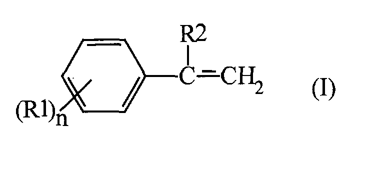 in der R¹ und R² für Wasserstoff oder C₁- bis C₈-Alkyl und n für 0, 1, 2 oder 3 stehen,
   - gegebenenfalls mindestens einer monoethylenisch ungesättigten Nitrilverbindung, und
   - gegebenenfalls mindestens einem weiteren Monomer.

Gemäß dem erfindungsgemäßen Verfahren wird zunächst eine wäßrige Dispersion mindestens eines kautschukelatischen Dien-Polymerisats hergestellt, das mit Wasserstoff an einem Katalysator (teil)hydriert wird. Das erhaltene Polymerisat bildet den Pfropfkern, auf den im Anschluß daran die Pfropfhülle aufgepfropft wird. Das Verfahren ist einfach durchführbar und es werden Pfropfkautschuke erhalten, die gegenüber Umwelteinflüssen stabil sind und sich für den Einsatz als Schlagzähmodifier eignen.

In dem nach dem erfindungsgemäßen Verfahren hergestellten Pfropfkautschuk ist der kautschukelastische Pfropfkern zu einem Anteil von 30 bis 90 Gew.-%, bevorzugt 40 bis 80 Gew.-%, besonders bevorzugt 50 bis 75 Gew.-% enthalten und die Pfropfschale zu einem Anteil von 10 bis 70 Gew.-%, bevorzugt 20 bis 60 Gew.-%, besonders bevorzugt 25 bis 50 Gew.-%, wobei die Summe aus Pfropfkern und Pfropfschale 100 Gew.-%, bezogen auf den Pfropfkautschuk, ergibt und sich der Pfropfkern und die Pfropfschale aus mehreren Pfropfkernen und Pfropfschalen zusammensetzen können.

### a) Herstellung einer wäßrigen Dispersion mindestens eines kautschukelastischen Polymerisats

Das kautschukelastische Polymerisat ist aus den folgenden Komponenten aufgebaut
- 10 bis 100 Gew.-%, bevorzugt 20 bis 95 Gew.-%, besonders bevorzugt 50 bis 90 Gew.-% mindestens eines konjugierten Diens,
- 0 bis 90 Gew.-%, bevorzugt 5 bis 80 Gew.-%, besonders bevorzugt 10 bis 50 Gew.-% mindestens eines mit dem Dien copolymerisierbaren Monomers, und
- 0 bis 20 Gew.-%, bevorzugt 1 bis 15 Gew.-%, besonders bevorzugt 1 bis 10 Gew.-% mindestens eines modifizierenden Monomers,
wobei die Summe der Komponenten 100 Gew.-%, bezogen auf das kautschukelastische Polymerisat, ergibt.

Als wäßrige Dispersionen kautschukelastischer Polymerisate sind sowohl Dispersionen geeignet, die durch radikalische Polymerisation von wäßrigen Monomeremulsionen hergestellt werden (Primärdispersionen) als auch solche, deren Polymerisate auf anderem Wege hergestellt werden und anschließend in eine wäßrige Dispersion überführt werden (Sekundärdispersionen).

### Monomere

### Diene

Als Diene können alle üblichen Diene eingesetzt werden. Bevorzugt werden Diene eingesetzt, ausgewählt aus Butadien, Isopren, Chloropren, 1-Methylbutadien, 2,3-Dimethylbutadien, 2-(Tri-C₁-C₄-alkyl)silylbutadien, wie 2-Triethylsilyl-1,3-butadien sowie Mischungen davon. Besonders bevorzugt sind Butadien und Isopren, ganz besonders bevorzugt ist Butadien.

### Mit dem Dien copolymerisierbare Monomere

Neben dem Dien kann das kautschukelastische Polymerisat aus weiteren Monomeren, die mit dem Dien copolymerisierbar sind, aufgebaut sein. Geeignete Monomere sind im allgemeinen ausgewählt aus Ethylen, Propylen, vinylaromatischen Monomeren, z.B. Styrol, α-Methylstyrol, o-Chlorstyrol oder Vinyltoluole, Vinylestern aliphatischer oder verzweigter C₁- bis C₁₈-Monocarbonsäuren, z.B. Vinylacetat, Vinylpropionat, Vinylbuterat, Vinylvalerat, Vinylhexanoat, Vinyl-2-ethylhexanoat, Vinyldecanoat, Vinyllaurat, Vinylstearat, Estern aus bevorzugt 3 bis 6 Kohlenstoffatome aufweisenden ethylenisch ungesättigten Mono- und dicarbonsäuren, z.B. Acrylsäure, Methacrylsäure, Maleinsäure, Fumarsäure und Itaconsäure, mit im allgemeinen 1 bis 12, bevorzugt 1 bis 8, besonders bevorzugt 1 bis 4 Kohlenstoffatome aufweisenden Alkanolen, z.B. Methanol, Ethanol, n-Propanol, Isopropanol, 1-Butanol, 2-Butanol, Isobutanol, tert.-Butanol, n-Hexanol, 2-Ethylhexanol und C5- bis C10-Cycloalkanolen, z.B. Cyclopentanol und Cyclohexanol, wobei die Ester der Acrylsäure und Methacrylsäure, z.B. Methylmethacrylat, n-Butylmethacrylat, tert.-Butylmethacrylat, n-Butylacrylat, 2-Ethylhexylacrylat und tert.-Butylacrylat bevorzugt sind, sowie ethylenisch ungesättigten Nitrilen, z.B. Acrylnitril und Methacrylnitril. Bevorzugte Monomere, die mit dem Dien polymerisierbar sind, sind Styrol, α-Methylstyrol und Acrylnitril.

### Modifizierende Monomere

Die kautschukelastischen Polymerisate können zusätzlich aus modifizierenden Monomeren aufgebaut sein. Zu den modifizierenden Monomeren zählen Monomere, die eine erhöhte Wasserlöslichkeit aufweisen, z.B. >60 g/l bei 25 °C. Geeignete Monomere mit erhöhter Wasserlöslichkeit sind ausgewählt aus den vorgenannten ethylenisch ungesättigten Carbonsäuren, bevorzugt Acrylsäure, Methacrylsäure, Maleinsäure und Itaconsäure, den Amiden der vorgenannten ethylenisch ungesättigten Carbonsäuren, z.B. Acrylamid und Methacrylamid, den Alkylolamiden der vorgenannten ethylenisch ungesättigten Carbonsäuren, z.B. N-Methylolacrylamid und N-Methylolmethacrylamid, den Hydroxyalkylestern der vorgenannten ethylenisch ungesättigten Carbonsäuren, z.B. 2-Hydroxyethylacrylat und -methacrylat, ethylenisch ungesättigten Sulfonsäuren bzw. deren Alkalimetallsalzen, z.B. Vinylsulfonsäure, Allylsulfonsäure, Methallylsulfonsäure, Acrylamido-2-methylpropansulfonsäure und N-Vinyllactamen, z.B. N-Vinylpyrrolidon oder Vinylcaprolactam.

Weitere geeignete modifizierende Monomere sind Monomere, die wenigstens zwei nichtkonjugierte, ethylenisch ungesättigte Doppelbindungen aufweisen. Geeignete Monomere mit wenigstens zwei nicht-konjugierten, ethylenisch ungesättigten Doppelbindungen sind ausgewählt aus Diestern zweiwertiger Alkohole mit ethylenisch ungesättigten Monocarbonsäuren, z.B. Alkylenglycoldiacrylate und Dimethacrylate wie Ethylenglycoldi(meth)acrylat, 1,3-Butylenglycoldi(meth)acrylat, 1,4-Butylenglycoldi(meth)acrylat, Propylenglycoldi(meth)acrylat sowie Divinylbenzol, Vinylmethacrylat, Vinylacrylat, Allylmethacrylat, Allylacrylat, Diallylmaleat, Diallylfumarat, Diallylphthalat, Methylenbisacrylamid, Dihydrodicyclopentadienylacrylat und -methacrylat, N,N'-Divinylimidazolin-2-on und Triallylcyanurat.

Besonders bevorzugt eingesetzte modifizierende Monomere sind Acrylsäure, Methacrylsäure, Itaconsäure, Acrylamid, Methacrylamid, N-Methylolacrylamid und/oder N-Methylolmethacrylamid.

Besonders bevorzugt werden Dispersionen von kautschukelastischen Polymerisaten eingesetzt, aufgebaut aus Butadien oder Isopren, bevorzugt Butadien als Dienkomponente und Styrol oder Acrylnitril oder Methacrylnitril oder Isobuten oder (Meth)acrylsäureestern als mit dem Dien copolymerisierbare Monomere.

Bevorzugte Monomerkombinationen aus Dienkomponente und mit dem Dien copolymerisierbaren Monomeren sind Butadien und/oder Isopren mit Styrol und oder α-Methylstyrol, Butadien und Isopren mit Acrylnitril und/oder Methacrylnitril, Butadien mit Acrylnitril und Styrol, Butadien mit Isopren, Butadien mit (Meth)acrylsäurealkylestern.

Ganz besonders bevorzugte Monomerkombinationen zur Herstellung kautschukelastischer Polymerisate sind
- 20 bis 100 Gew.-% einer Dienkomponente ausgewählt aus Butadien und Isopren, und
- 0 bis 80 Gew.-% mindestens eines mit dem Dien copolymerisierbaren Monomeren, ausgewählt aus Styrol, a-Methylstyrol und Acrylnitril,
wobei sich die Anteile des Diens und des mit dem Dien copolymerisierbaren Monomeren zu 100 Gew.-% addieren. Selbstverständlich können diese kautschukelastischen Polymerisate modifizierende Monomere in den oben genannten Mengen einpolymerisiert enthalten und zwar bevorzugt bis zu 10 Gew.-%, bezogen auf die Gesamtmenge der Monomere (Dien, mit dem Dien copolymerisierbares Monomer, modifizierendes Monomer). Bevorzugte modifizierende Monomere sind Acrylsäure, Methacrylsäure, Itaconsäure, Acrylamid, Methacrylamid, N-Methylolacrylamid und/oder N-Methylolmethacrylamid.

### Herstellung der kautschukelastischen Polymerisate

Die Herstellung der kautschukelastischen Polymerisate ist dem Fachmann bekannt und kann, wie in DE-A 197 53 302, EP-A 0 104 899 und NE 6817097 beschrieben, erfolgen. Die Polymerisation kann grundsätzlich durch radikalische Polymerisation als Massepolymerisation oder in wäßriger Lösung, in Suspension oder in Emulsion durchgeführt werden. Je nach Polymerisationstyp liegen die konjugierten Diene 1,4-polymerisiert und/oder 1,2-polymerisiert vor. Bevorzugt werden in dem erfindungsgemäßen Verfahren Polymerisate eingesetzt, die durch radikalische, wäßrige Emulsionspolymerisation (einschließlich Mini- und Mikroemulsionspolymerisation), Suspensionspolymerisation (einschließlich Mikrosuspensionspolymerisation) der vorgenannten Monomere hergestellt wurden. Diese Verfahren sind in der Literatur beschrieben, beispielsweise in Ullmanns Encyclopedia of Industrial Chemistry, 5^{th} ed., Vol.A21, S. 373 bis 393. Üblicherweise werden diese Emulsionspolymerisationen in Gegenwart von Radikalinitiatoren und gegebenenfalls oberflächenaktiven Substanzen wie Emulgatoren und Schutzkolloiden (siehe z.B. Houben-Weyl, Methoden der organischen Chemie, Bd. XIV/1, Makromolekulare Stoffe , Georg-Thieme-Verlag, Stuttgart 1961, S. 192 bis 208) durchgeführt.

### Polymerisationsinitiatoren

Geeignete radikalische Polymerisationsinitiatoren umfassen organische Peroxide wie tert.-Butylhydroperoxid, Benzoylhydroperoxid, Diisopropylbenzoylperoxid, anorganische Peroxide wie Wasserstoffperoxid, Salze der Peroxomono- und/oder Peroxodischwefelsäure, bevorzugt die Ammonium- und/oder Alkalimetallperoxodisulfate (Persulfate), sowie Azoverbindungen, wobei die Persulfate besonders bevorzugt sind. In einer weiteren bevorzugten Ausführungsform werden kombinierte Systeme eingesetzt, die aus wenigstens einem organischen Reduktionsmittel und wenigstens einem Peroxid und/oder Hydroperoxid zusammengesetzt sind, z.B. tert.-Butylhydroperoxid und das Natriumsalz der Hydroxymethansulfinsäure oder Wasserstoffperoxid und Ascorbinsäure (als elektrolytfreies Redoxinitiatorsystem) und kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid auch tert.-Butylhydroperoxid, Alkalimetallperoxysulfate und/oder Ammoniumperoxodisulfat eingesetzt werden können. Anstelle eines wasserlöslichen Eisen(II)salzes kann auch eine Kombination aus wasserlöslichen Eisen/Vanadium-Salzen eingesetzt werden.

Die Polymerisationsinitiatoren werden in den üblichen Mengen eingesetzt, im allgemeinen in Mengen von 0,01 bis 5 Gew.-%, bevorzugt von 0,1 bis 2,0 Gew.-%, bezogen auf die zu polymerisierenden Monomere.

### Polymerisationsregler

Gegebenenfalls kann die Monomermischung in Gegenwart von üblichen Polymerisationsreglern wie Mercaptanen, z.B. tert.-Dodecylmercaptan, Terpenolen und Co(II)-Komplexen polymerisiert werden. Diese werden bevorzugt in einer Menge von 0,01 bis 5 Gew.-%, bezogen auf die Gesamtmenge der Mischung, eingesetzt.

### Emulgatoren

Hinsichtlich der verwendbaren Emulgatoren bestehen keine besonderen Einschänkungen. Bevorzugt werden neutrale Emulgatoren wie ethoxylierte Mono-, Di- und Trialkylphenole (EO-Grad (Ethoxylierungsgrad): 3 bis 5, Alkylrest: C₄ bis C₉) oder ethoxylierte Fettalkohole (EO-Grad: 3 bis 50, Alkylrest C₈ bis C₃₄) und/oder anionische Emulgatoren wie die Alkali- und Ammoniumsalze von Fettsäuren (Alkylrest C₁₂ bis C₂₄), von Schwefelsäurehalbestern ethoxylierter Alkanole (EO-Grad: 4 bis 30, Alkylrest C₈ bis C₂₂) und ethoxylierter Alkylphenole (EO-Grad: 3 bis 50, Alkylrest C₄ bis C₁₀), von Alkylsulfonsäuren (Alkylrest C₈ bis C₂₂) und von Alkylarylsulfonsäuren (Alkylrest C₄ bis C₁₈). Als anionische Emulgatoren kommen weiterhin Alkali- oder Ammoniumsalze von Mono- oder Di-C₄- bis C₂₄-Alkylderivaten des Bis(phenylsulfonsäure)ethers in Frage, z.B. technische Gemische, die 50 bis 80% des monoalkylierten Produkts enthalten. Derartige Emulgatoren sind aus US 4,269,749 bekannt, die technischen Gemische sind beispielsweise unter der Bezeichnung Dowfax®; 2A1 (Dow Chemical) im Handel erhältlich.

Besonders bevorzugt sind Alkalimetall- und/oder Ammoniumsalze, insbesondere die Natriumsalze von Alkylarylsulfonsäuren, Alkylsulfonsäuren (z.B. sulfoniertes C₁₂- bis C₁₈-Paraffin; als Emulgator K30 der Bayer AG im Handel), Alkylsulfaten (z.B. Natriumlaurylsulfonat als Texapon®K12 der Henkel KGaA im Handel). Ebenfalls geeignete Emulgatoren sind die Natrium- oder Kaliumsalze von Fettsäuren (C₁₂- bis C₂₃-Alkylreste), z.B. Kaliumoleat. Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192 bis 208. Anstelle von oder im Gemisch mit Emulgatoren können auch konventionelle Schutzkolloide wie Polyvinylalkohol, Polyvinylpyrrolidon oder amphiphile Blockpolymere mit kurzen hydrophoben Blöcken zur Costabilisierung eingesetzt werden. In der Regel wird die verwendete Menge an Emulgatoren, bezogen auf die zu polymerisierenden Monomere, 5 Gew.-% nicht überschreiten.

### Polymerisationsverfahren

Die radikalische Polymerisation kann in Gesamtsatzvorlage (Batch-Verfahren) oder im Zulaufverfahren durchgeführt werden. Auch im technischen Maßstab ist sowohl das Batch-Verfahren als auch das Zulaufverfahren geeignet. Bei dem Zulaufverfahren wird die überwiegende Menge (in der Regel 50 bis 100 Gew.-%) der zu polymerisierenden Monomeren dem Polymerisationsgefäß gemäß dem Fortschreiten der Polymerisation der bereits im Polymerisationsgefäß befindlichen Monomeren zugesetzt. Das radikalische Initiatorsystem kann hierbei sowohl vollständig im Polymerisationsgefäß vorgelegt, als auch nach Maßgabe seines Verbrauchs im Verlauf der radikalischen wäßrigen Emulsionspolymerisation kontinuierlich oder stufenweise der Polymerisationsreaktion zugeführt werden. Im einzelnen hängt dies in bekannter Weise sowohl von der chemischen Natur des Initiatorsystems als auch von der Polymerisationstemperatur ab. Vorzugsweise wird das Initiatorsystem nach Maßgabe des Verbrauchs der Polymerisationsreaktion zugeführt.

Die Polymerisationsreaktion kann in Gegenwart einer wäßrigen Polymerisatdispersion als Polymersaat (Saatlatex) durchgeführt. Derartige Verfahren sind dem Fachmann grundsätzlich bekannt und beispielsweise in DE-A 42 13 967, DE-A 42 13 968, EP-A 0 567 811, EP-A 0 567 812 oder EP-A 0 567 819 beschrieben, auf die hiermit in vollem Umfang Bezug genommen wird. Grundsätzlich kann die Saat je nach gewünschter Eigenschaft vorgelegt oder während der Polymerisation kontinuierlich oder stufenweise zugegeben werden. Vorzugsweise erfolgt die Polymerisation mit vorgelegter Saat. Die Menge an Saatpolymer liegt vorzugsweise im Bereich von 0,05 bis 5 Gew.-%, besonders bevorzugt von 0,1 bis 2 Gew.-%, ganz besonders bevorzugt von 0,2 bis 1 Gew.-%, bezogen auf die eingesetzten Monomere. Vorzugsweise weisen die Polymerisatteilchen des verwendeten Saatlatex gewichtsmittlere Teilchendurchmesser im Bereich von 10 bis 100 nm, besonders bevorzugt von 20 bis 60 nm, ganz besonders bevorzugt von etwa 30 nm auf. Bevorzugt wird eine Polystyrolsaat verwendet.
Die Polymerisationsreaktion wird bevorzugt unter Druck durchgeführt. Die Polymerisationsdauer kann in einem weiten Bereich variieren. Sie liegt im allgemeinen im Bereich von 1 bis 150 Stunden, bevorzugt von 3 bis 40 Stunden. Auch die Polymerisationstemperatur ist in einem weiten Bereich variabel. Sie beträgt, in Abhängigkeit vom verwendeten Initiator, etwa 0 bis 110°C.

Die gemäß dem beschriebenen Verfahren hergestellten Dispersionen kautschukelastischer Polymerisate weisen im allgemeinen Feststoffgehalte von bis zu 75 Gew.-% auf. Von besonderer Bedeutung sind Dispersionen kautschukelastischer Polymerisate mit Feststoffgehalten von 30 bis 70 Gew.-%. Für den Einsatz in der anschließenden Hydrierung (Schritt b) können Dispersionen mit den genannten Feststoffgehalten eingesetzt werden. Gegebenenfalls müssen die Dispersionen jedoch zuvor auf einen geeigneten Feststoffgehalt verdünnt werden. Bevorzugt liegt der Feststoffgehalt der in dem erfindungsgemäßen Verfahren in Schritt b) eingesetzten Dispersionen im Bereich von 10 bis 60 Gew.-%, besonders bevorzugt von 20 bis 50 Gew.-%, bezogen auf das Gesamtgewicht der Dispersion.

Die in den Polymerisatdispersionen in der Regel noch enthaltenen oberflächenaktiven Substanzen sowie weitere Stoffe, die beispielsweise bei Emulsionspolymerisationen als übliche Hilfsmittel verwendet werden, wirken sich in dem anschließenden Hydrierverfahren nicht störend aus. Es ist jedoch auch möglich, die Polymerisatdispersion vor der Hydrierung chemisch oder physikalisch zu desodorieren. Eine physikalische Desodorierung durch Abstreifen der Restmonomere mittels Wasserdampf ist beispielsweise aus EP-A 0 584 458 bekannt. In der EP-A 0 327 006 wiederum ist die Anwendung konventioneller Destillationsverfahren empfohlen. Die chemische Desodorierung erfolgt bevorzugt durch eine sich an die Hauptpolymerisation anschließende Nachpolymerisation. Solche Verfahren werden beispielsweise in DE-A 38 34 734, EP-A 0379 892, EP-A 0 327 006, DE-A 44 19 518, DE-A 44 35 422 und DE-A 44 35 423 beschrieben.

### b) Selektive Hydrierung von ethylenisch ungesättigten Doppelbindungen in dem kautschukelastischen Polymerisat mit Wasserstoff

Im Anschluß an die Herstellung des kautschukelastischen Polymerisats (Schritt a) erfolgt eine selektive Hydrierung von ethylenisch ungesättigten Doppelbindungen in dem kautschukelastischen Polymerisat mit Wasserstoff in Gegenwart mindestens eines Hydrierkatalysators, ausgewählt aus Salzen und Komplexverbindungen des Rhodiums und/oder Rutheniums, wobei die wäßrige Dispersion des kautschukelastischen Polymerisats nicht mehr als 20 Vol.-% eines organischen Lösungsmittels enthält, zur Gewinnung des Pfropfkerns.

### Hydrierkatalysatoren

Als Hydrierkatalysatoren bzw, als Katalysatorvorstufen sind in Schritt b) des erfindungsgemäßen Verfahrens alle Salze und/oder Komplexverbindungen des Rutheniums oder Rhodiums geeignet, die unter den jeweiligen Reaktionsbedingungen, d.h. Wasserstoffpartialdruck, Reaktionstemperatur, pH-Wert der Reaktionsmischung sowie gegebenenfalls anwesende Coliganden (bzw. als Coliganden wirkende organische oder anorganische Verbindungen) niedermolekulare hydrieraktive Spezies bilden können.

Zu diesem Zweck geeignete Salze des Rutheniums und Rhodiums sind in DE-A 197 53 302 beschrieben. Geeignete Salze sind beispielsweise deren Hydride, Oxide, Sulfide, Nitrate, Sulfate, Halogenide, z.B. die Chloride, Carboxylate, z.B. die Acetate, Propionate, Hexanoate oder Benzoate, Salze mit Sulfonsäuren sowie gemischte Salze, d.h. Salze mit verschiedenen Anionen, z.B. Oxidchloride. Weiterhin eignen sich Salze von komplexen Ionen des Rutheniums und/oder Rhodiums, beispielsweise die Salze der Ruthenium und/oder Rhodiumsauerstoffsäuren, die Salze von Halogenoruthenaten und Halogenorhodaten, insbesondere die Chlororuthenate und Chlororhodate, die Amin- und Aquokomplexe der Rutheniumhalogenide und Rhodiumhalogenide, insbesondere der Chloride, sowie die Salze von Nitroruthenaten. Beispiele für die vorgenannten Salze und komplexen Salze sind Ruthenium(III)chlorid, Ruthenium(III)nitrosylchlorid, Ammoniumpentachloroaquoruthenat(III), Hexaminruthenium(II)- und -ruthenium(III)chlorid, Dichlorobis(2,2'-dipyridyl)ruthenium(II), Tris(2,2'-dipyridyl)ruthenium(II)chlorid, Pentaaminchlororuthenium(III)chlorid, Kaliumpentachloronitrosylruthenium(II), Ruthenium(IV)oxid, Tetraacetatochlorodiruthenium(II,III), Hexakisacetatotriaquo-µ-oxotrisrhodium(III)acetat, Rhodium(III)chlorid, Rhodium(III)hydroxid, Rhodium(III)nitrat, Rhodium(III)sulfat, Ammoniumpentachloroaquarhodat(III), Kaliumpentachlororhodat(III), Natriumhexachlororhodat (III), Triamintrichlororhodium(III), Trisethylendiaminrhodium-(III)chlorid, Rhodium(II)acetat-Dimer, Hexakisacetatotriaquo-µ-oxotrisrhodium(III), Rhodium(III)hydroxid, Rhodium(IV)oxid und Kaliumhexanitrorhodat. Ebenfalls geeignet sind neutrale Komplexe des Rutheniums und des Rhodiums. Hierbei sei angemerkt, daß die Übergänge zwischen den Salzen des Rutheniums bzw. Rhodiums sowie salzartigen und neutralen Komplexen fließend sind und die vorliegende Einteilung nur ordnenden Charakter hat. Beispiele für neutrale Komplexe umfassen die 2,4-Pentandionate des Rutheniums und des Rhodiums wie Ruthenium(III)tris-2,4-pentandionat, Rhodium(I)dicarbonyl-2,4-pentaridionat, Rhodium(III)tris-2,4-pentandionat, Bisethylenrhodium(I) -2,4-pentandionat und Norbonadienrhodium(I) -2,4-pentandionat, die Carbonylkomplexe des Rutheniums und des Rhodiums wie Dodecacarbonyltetrarhodium, Hexadecacarbonylrhodium, Tetracarbonyldi-µ-chlorodirhodium(I), und Dodecacarbonyltriruthenium.

Geeignete Komplexe des Rutheniums sind in einer bevorzugten Ausführungsform Komplexe der allgemeinen Formel

RuX¹X²(CO)ₖ(L¹)₁(L²)₂

mit phosphororganischen Verbindungen, worin
- X¹ und X²: unabhängig voneinander für Wasserstoff, Halogenid, bevorzugt Chlorid, das Anion einer Carbonsäure, z.B. Acetat, Benzoat oder Hexanoat oder einer Sulfonsäure, z.B. Phenylsulfonat, Acetylacetonat, Phenyl, das gegebenenfalls substituiert ist, stehen,
- k und 1: unabhängig voneinander für 0, 1 oder 2 stehen, mit der Maßgabe, daß k + 1 = 1 oder 2 ist,
- L¹: ausgewählt ist aus Carbonyl, Pyridin, Benzonitril, Dibenzophosphol, Cycloolefinen und einem Liganden der allgemeinen Formel PR₃, worin
R für Alkyl, Alkyloxy, Cycloalkyl, Cycloalkyloxy, Aryl, bevorzugt Phenyl, das gegebenenfalls substituiert sein kann, und Aryloxy, und
- L²: für PR₃ und (L²)₂ auch für R₂P - A - PR₂ stehen kann, worin R die oben genannte Bedeutung aufweist und A für Alkylen oder Arylen steht.

In diesem Zusammenhang steht Alkyl sowohl für lineares als auch für verzweigtes Alkyl, das bevorzugt 1 bis 12 Kohlenstoffatome und besonders bevorzugt 1 bis 4 Kohlenstoffatome aufweist, z.B. Methyl, Ethyl, n-Propyl, Isopropyl, n-Butyl, Isobutyl, tert.-Butyl, n-Hexyl, 2-Ethylhexyl und n-Decyl. Alkyloxy steht in der Regel für C₁- bis C₁₂-Alkyloxy, z.B. Methoxy, Ethoxy, n-Propoxy, Isopropoxy, n-Butoxy, 2-Butyloxy, tert.-Butoxy, n-Hexyloxy, 2-Ethylhexyloxy. Der Alkylrest kann ferner Hydroxy- oder Aminofunktionen aufweisen oder durch ein oder mehrere, nicht benachbarte Sauerstoffatome oder Iminogruppen unterbrochen sein. Beispiele für derartige Reste sind 2-Hydroxyethyl, Hydroxypropyl, 2-Aminoethyl, 5-Hydroxy-3-oxopentyl. Aryl steht beispielsweise für Phenyl oder Naphthyl, die einen oder mehrere Substituenten aufweisen können. Geeignete Substituenten sind Halogen, z.B. Chlorid, Alkyl, bevorzugt C₁- bis C₄-Alkyl, Alkyloxy, bevorzugt C₁- bis C₄- Alkyloxy und Hydroxy, das gegebenenfalls ethoxyliert sein kann. Bevorzugtes Aryl ist Phenyl, o-, m- oder p-Tolyl, p-Chlorphenyl, p-tert.-Butylphenyl und p-Hydroxyphenyl, das auch ethoxyliert sein kann (EO-Grad: 1 bis 50). Alkylen steht bevorzugt für 1,2-Ethylen oder 1,2- bzw. 1,3-Propylen, die gegebenenfalls substituiert sind und/oder Teil eines Carbocyclus oder eines Heterocyclus sind. Arylen umfaßt bevorzugt o-Phenylen, o,o-Diphenylen und (o,o-Diphenylen)methan.

Beispiele für Liganden PR₃ sind Triphenylphosphin, Triisopropylphosphin, Tris-n-butylphosphin, Tris-n-octylphosphin, Tricyclohexylphosphin, Trianisylphosphan, Tri(p-tolyl)phosphin, Triethylphosphit und Tri-n-butylphosphit.

Geeignete Komplexe des Rhodiums sind Rhodiumphosphinkomplexe der allgemeinen Formel

RhXₘL³L⁴(L⁵)ₙ

worin
- X: für Halogenid, bevorzugt Chlorid oder Bromid, das Anion einer Carbonsäure, Acetylacetonat, Aryl- oder Alkylsulfonat, Hydrid oder das Diphenylhydrazinanion steht,
- L³, L⁴, L⁵: unabhängig voneinander für CO, Olefine, Cycloolefine, Dibenzophosphol, Benzonitril, PR₃ oder R₂P - A - PR₂ stehen,
- m: für 1 oder 2 und n für 0, 1 oder 2 stehen,
mit der Maßgabe, daß wenigstens einer der Liganden L³, L⁴ oder L⁵ für einen der oben genannten phosphorenthaltenden Liganden der allgemeinen Formeln PR₃ oder R₂P - A-PR₂ steht.

X steht bevorzugt für Hydrid, Chlorid, Bromid, Acetat, Tosylat, Acetylacetonat oder das Diphenyltriazinanion, besonders bevorzugt für Hydrid, Chlorid oder Acetat.

Beispiele für geeignete Phosphinkomplexe des Rutheniums bzw. des Rhodiums sind:
Carbonylchlorohydridobis(tricyclohexylphosphin)ruthenium(II),
Carbonylchlorohydridobis(triisopropylphosphin)ruthenium(II),
Carbonylchlorohydridobis(triphenylphosphin)ruthenium(II),
Carbonylchlorohydridobis(tricyclohexylphosphin)ruthenium(II),
Carbonylstyrylbis(tricyclohexylphosphin)ruthenium(II),
Carbonylstyrylbis(triisopropylphosphin)ruthenium(II),
Carbonylchlorobenzoatobis(triphenylphosphin)ruthenium(II),
Dichlorotris(trihenylphosphin)ruthenium(II),
Bis(triphenylphosphin)rutheniumdicarbonylchlorid, Acetatohydridotris(triphenylphosphin)ruthenium(II), Chlorotris(triphenylphosphin)rhodium(I), Hydridotetrakis(triphenylphosphin)rhodium(I), Hydridotris(dibenzophosphol)rhodium(I).

Die Hydrieraktivität der oben genannten Ruthenium- und Rhodiumsalze sowie der Komplexverbindungen kann grundsätzlich durch Zugabe von phosphorenthaltenden Verbindungen, die zur Ausbildung wenigstens einer koordinativen Bindung zwischen dem Phosphoratom und dem Übergangsmetall in der Lage sind, gesteigert werden.

Die phosphorenthaltenden Verbindungen sind bevorzugt ausgewählt aus Verbindungen der allgemeinen Formeln PR₃ und R₂P-A-PR₂, worin die Reste R gleich oder verschieden sein können und unabhängig voneinander Alkyl, Cycloalkyl, Aryl, Alkyloxy, Cycloalkyloxy, Aryloxy oder Fluor bedeuten und A ein bivalenter Kohlenwasserstoffrest ist.

Beispiele für geeignete phosphorenthaltende Verbindungen sind die oben genannten Verbindungen der allgemeinen Formeln PR₃ und R₂P - A - PR₂ sowie ferner Trifluorphosphan, Dibenzophosphol etc. Derartige Verbindungen können auch dahingehend modifiziert sein, daß sie noch weitere, zur Koordination mit dem Metallatom geeignete Atome oder Atomgruppen, wie Amino- oder Iminogruppen, z.B. Oxazolin oder Imidazolin-Gruppen, aufweisen. Die Wirkungsweise derartiger phosphorenthaltender Verbindungen ist vermutlich so zu erklären, daß sie die Bildung hydrieraktiver Spezies aus dem jeweils eingesetzten Ruthenium- oder Rhodiumprecursor unterstützen. Bevorzugte phosphorenthaltende Verbindungen sind Verbindungen der allgemeinen Formeln PR₃ und R₂P - A - PR₂, worin die Reste R gleich oder verschieden sein können und unabhängig voneinander Alkyl, Cycloalkyl, Aryl, Alkyloxy, Cycloalkyloxy, Aryloxy oder Fluor bedeuten und A ein bivalenter Kohlenwasserstoffrest ist.

In einer bevorzugten Ausführungsform der vorliegenden Erfindung werden als Hydrierkatalysatoren Salze und/oder Komplexverbindungen des Rutheniums eingesetzt. Diese werden bevorzugt mit den oben genannten phosphorenthaltenden Verbindungen, insbesondere mit Verbindungen der allgemeinen Formeln PR₃ und/oder R₂P - A - PR₂ eingesetzt. In diesem Fall werden die phosphorenthaltenden Verbindungen besonders bevorzugt ausgewählt aus Triisopropylphosphin, Tri-n-butylphosphin, Tris-n-octylphosphin, Tricyclohexylphosphin, Triphenylphosphin, Trisanisylphosphin und Tris(p-tolyl)phosphin.

In einer ganz besonders bevorzugten Ausführungsform des erfindungsgemäßen Verfahrens wird ein Katalysatorsystem eingesetzt, das wenigstens eines der oben genannten Pentandionate des Rutheniums, bevorzugt Ruthenium(III)tris-2,4-pentandionat und wenigstens eine Verbindung der allgemeinen Formel PR₃ und/oder R₂P - A - PR₂, bevorzugt Trisisopropylphosphin, Tri-n-butylphosphin, Tricyclohexylphosphin und/oder Triphenylphosphin umfaßt.

Das molare Verhältnis von phosphorenthaltender Verbindung zu Metallatom liegt im allgemeinen im Bereich von 1 : 2 bis 40 : 1, bevorzugt von 1 : 1 bis 20 : 1 und im Falle einer Kombination eines Rutheniumpentandionats mit einer phosphorenthaltenden Verbindung im allgemeinen im Bereich von 1 : 2 bis 20 : 1, bevorzugt von 2 : 1 bis 10 : 1. Bevorzugt werden derartige Katalysatorsysteme vor ihrem Einsatz in der Hydrierungsreaktion durch Zusammenmischen der Komponenten, gegebenenfalls unter Erwärmen, im allgemeinen auf 50 bis 150 C, in einem geeigneten Lösungsmittel und gegebenenfalls unter Wasserstoffdruck, im allgemeinen von 1 bis 20 bar, hergestellt. Als Lösungsmittel kommen z.B. aromatische Kohlenwasserstoffe wie Benzol, Toluol, Xylole, Chlorbenzol, Anisol, Cumol, Ether wie Diethylether, Tetrahydrofuren, Dioxan, Amide wie Dimethylformamid, N-Methylpyrrolidon, Dimethylsulfoxid, Alkohole wie Methanol, Ethanol, n-Propanol, Isopropanol, n-Butanol, tert.-Butanol oder Ketone wie Aceton oder Methylethylketon in Frage.

### Hydrierverfahren

Die Durchführung der Hydrierung erfolgt in der Regel so, daß man einen der oben genannten Hydrierkatalysatoren oder Katalysatorvorstufen sowie gegebenenfalls einen oder mehrere Coliganden, z.B. die oben genannten phosphorenthaltenden Verbindungen, gegebenenfalls gelöst in einem organischen Lösungsmittel, zu der Dispersion des kautschukelastischen Polymerisats aus Schritt a) gibt. Gegebenenfalls stellt man die Dispersion durch Verdünnen mit Wasser oder einer Wasser-Emulgator-Mischung oder einem mit Wasser mischbaren organischen Lösungsmittel auf einen geeigneten Feststoffgehalt ein. Dann stellt man den gewünschten Wasserstoffdruck ein und erhitzt auf eine geeignete Reaktionstemperatur. Hierbei kann man z.B. so vorgehen, daß man zuerst nach Zugabe des Katalysators einen geringeren Wasserstoffüberdruck einstellt, dann den Reaktionsansatz auf die gewünschte Reaktionstemperatur erhitzt und dann den für die Reaktion erforderlichen Wasserstoffüberdruck einstellt. Es ist oftmals zweckmäßig, zuvor das Reaktionsgefäß mit einem inerten Gas, z.B. Stickstoff, zu spülen.

Geeignete Lösungsmittel zum Verdünnen umfassen bevorzugt die bereits genannten C₁-bis C₄-Alkanole, Ketone wie Aceton und Methylethylketon, cyclische Ether wie Tetrahydrofuran oder Dioxan oder Amide wie N,N-Dimethylformamid oder N-Methylpyrrolidon. Vorzugsweise wird die wäßrige Dispersion (Hydriermischung), sofern erforderlich, ausschließlich mit Wasser oder einer wäßrigen Emulsion verdünnt.

Der Lösungsmittelgehalt der zu hydrierenden Polymerisatdispersion beträgt weniger als 20 Gew.-%, bevorzugt 0 bis 10 Gew.-%, besonders bevorzugt 0 bis 5 Gew.-%. Bevorzugt wird die wäßrige Dispersion des kautschukelastischen Polymerisats, sofern erforderlich ausschließlich mit Wasser oder einer Wasser-Emulgator-Lösung verdünnt. Eine Quellung des kautschukelastischen Polymerisats in einem organischen Lösungsmittel oder die Herstellung einer Lösung des kautschukelastischen Polymerisats in einem organischen Lösungsmittel ist zur Durchführung der Hydrierung in Schritt b) des erfindungsgemäßen Verfahrens nicht erforderlich.

Es erweist sich jedoch oftmals als zweckmäßig, insbesondere bei Verwendung von Coliganden wie den oben genannten phosphorenthaltenden Verbindungen, die jeweils gewünschte Ruthenium und/oder Rhodiumverbindung in einem geeigneten Lösungsmittel mit dem Coliganden zu vereinigen und die dabei erhaltene Lösung oder Suspension zu der Dispersion des kautschukelastischen Polymerisats zuzugeben. Gegebenenfalls wird diese Lösung oder Suspension, bevor sie zu der Dispersion des kautschukelastischen Polymerisats gegeben wird, mit Wasserstoff oder einem anderen Reduktionsmittel, z.B. mit Wasserstoff bei Drücken im Bereich von 1 bis 20 bar und Temperaturen im Bereich von 50 bis 150 °C umgesetzt, wobei die katalytisch aktive Spezies gebildet wird. Die Aktivierung kann auch in situ, d.h. in der Dispersion des kautschukelastischen Polymerisats erfolgen.

Die Hydrierung erfolgt im allgemeinen bei einem Partialdruck des Wasserstoffs im Bereich von 0,5 bis 600 bar, bevorzugt von 50 bis 400 bar, besonders bevorzugt von 100 bis 300 bar. Die Reaktionstemperatur liegt im allgemeinen im Bereich von 20 bis 250 °C, bevorzugt von 50 bis 200 °C, besonders bevorzugt von 100 bis 180 °C. Je nach Art des Katalysatorsystems und dem gewünschten Umsatz werden Katalysatormengen im Bereich von 1 bis 1000 ppm Ruthenium und/oder Rhodium, bezogen auf das Gesamtgewicht der zu hydrierenden Polymerisatdispersion, bevorzugt von 5 bis 500 ppm eingesetzt. Die Reaktionsdauer liegt im allgemeinen im Bereich von 1 bis 30 Stunden, bevorzugt von 2 bis 25 Stunden, besonders bevorzugt von 3 bis 20 Stunden.

Die Reaktion kann je nach gewünschter Eigenschaft des hydrierten Polymerisats bis zu einem bestimmten Umsatz geführt werden, der in bekannter Weise durch Wahl der Reaktionsparameter wie Wasserstoffdruck und Temperatur sowie Art und Menge des eingesetzten Katalysatorsystems eingestellt werden kann. Eine Umsatzbestimmung kann z.B. IR-spektrometrisch durch Kontrolle der für ethylenisch ungesättigte Doppelbindungen typischen Banden im Bereich von 900 bis 1000 cm⁻¹ erfolgen.

Die hydrierten Polymerisatdispersionen zeichnen sich dadurch aus, daß die ethylenischen Doppelbindungen der in ihnen enthaltenen Polymerisate selektiv, auch in Gegenwart anderer hydrieraktiver Doppelbindungen, beispielsweise aromatischer C-C-Doppelbindungen, Carbonylgruppen, Nitrilfunktionen etc., hydriert worden sind. Es ist auch eine Teilhydrierung der in dem kautschukelastischen Polymerisat enthaltenen C-C-Doppelbindungen möglich. Dabei ist es bevorzugt, wenn 20 bis 99 %, besonders bevorzugt 50 bis 95 % der C-C-Doppelbindungen hydriert sind.

Diese nach der Hydrierung (Schritt b) erhaltenen Polymerisate bilden den einen Pfropfkern der Pfropfpolymerisate, die nach dem erfindungsgemäßen Verfahren hergestellt werden. Durch die Bereitstellung eines (teil)hydrierten Pfropfkerns auf der Basis von Dienpolymerisaten sind Pfropfpolymerisate herstellbar, die sich durch eine hohe, im Vergleich zu nicht-hydrierten Pfropfkernen auf Dien-Basis deutlich verbesserte Stabilität gegenüber Umwelteinflüssen wie Licht, Sauerstoff und/oder erhöhter Temperatur auszeichnen.

Eine besonders bevorzugte Ausführungsform betrifft die Hydrierung wäßriger Dispersionen von kautschukelastischen Polymerisaten auf der Basis von Styrol-Butadien. Polymerisatdipersionen, die Butadien und Styrol in einpolymerisierter Form enthalten, werden bevorzugt durch radikalische Emulsionspolymerisation hergestellt und sind wichtige Pfropfgrundlagen für großtechnische Produkte.

Die nach der Hydrierung erhaltenen (teil)hydrierten Polymerisate, die als Pfropfgrundlage dienen und ausgehend von kautschukelastischen Polymerisaten auf der Basis von Styrol und/oder α-Methylstyrol als copolymerisierbarem Monomer und Butadien und/oder Isopren als konjugiertem Dien erhältlich sind, sind im wesentlichen aus den Struktureinheiten I, II, III, IV und V aufgebaut, wobei die Struktureinheiten IV und V bei einer Teilhydrierung der in Schritt a) hergestellten kautschukelastischen Polymerisate vorkommen. 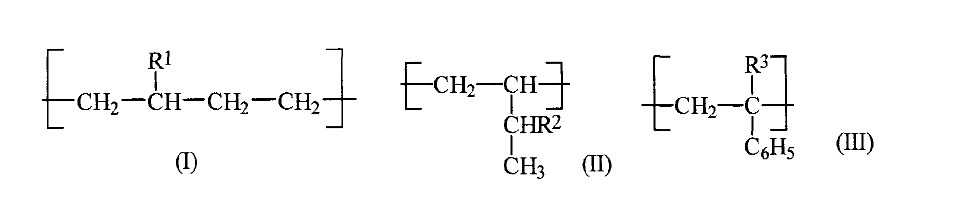 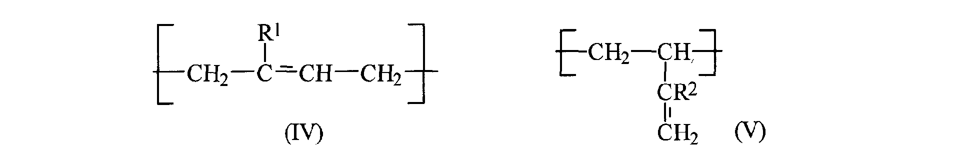 R¹, R² und R³ bedeuten unabhängig voneinander Wasserstoff oder Methyl.

Bevorzugt stehen R¹ und R² für Wasserstoff. In der Regel weisen diese Polymerisate (Pfropfkern) 50 bis 98 mol-% der Struktureinheiten I, II und IV und V und 2 bis 50 mol-% der Struktureinheiten III, jeweils bezogen auf die Gesamtmolzahl der Struktureinheiten I, II, III, IV und V auf. Dabei sind die Struktureinheiten I und II zu 20 bis 99 mol-%, bezogen auf die Summe der Molzahlen aus I + II + IV + V enthalten, was einem Hydrierungsgrad von 20 bis 99 % entspricht, wobei, wenn 99 mol-% der Struktureinheiten I und II, bezogen auf die Summe der Molzahlen aus I + II + IV + V vorliegen, ein (nahezu) vollständig hydriertes Polymerisat vorliegt.

Ferner können die Polymerisate (Pfropfkern) zusätzlich Struktureinheiten der Formel VI enthalten 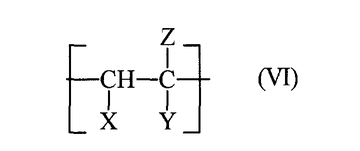 worin X ausgewählt ist aus Wasserstoff, COOH und CH₂-COOH und Y ausgewählt ist aus COOH, CONH₂, CONH-CH₂OH und Z ausgewählt ist aus Wasserstoff, CH₃ und für X = H auch CH₂COOH bedeuten kann. Ferner können für Z = H oder Methyl X und Y auch eine Gruppe -C(O)-O-C(O)- und C(O)-N(R)-C(O)- bedeuten, worin R für Wasserstoff, C₁-bis C₆-Alkyl oder Aryl steht. Struktureinheiten der Formel VI resultieren aus den modifizierenden Monomeren in den kautschukelastischen Polymerisaten der Ausgangsdispersion (Schritt a). Der molare Anteil der Struktureinheit VI liegt bevorzugt im Bereich von 0,05 bis 10 mol-%, bezogen auf die Gesamtmolzahl der Struktureinheiten I, II, III, IV und V.

Des weiteren können die Polymerisate (Pfropfkern) Struktureinheiten der Formel VII enthalten, 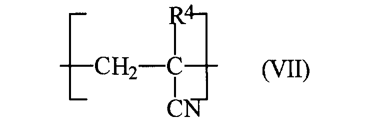 worin R⁴ Wasserstoff oder Methyl, bevorzugt Wasserstoff bedeutet. Struktureinheiten VII resultieren aus einpolymerisiertem Acrylnitril oder Methacrylnitril in den kautschukelastischen Polymerisaten der Ausgangsdispersion (Schritt a). Der Anteil an Struktureinheiten der Formel VII kann bis zu 40 mol-%, bezogen auf die Gesamtmolzahl der Struktureinheiten I, II, III, IV und V, bevorzugt 0,5 bis 35 mol-% betragen.

### c) Aufpfropfen mindestens einer Pfropfschale auf den Pfropfkern

Auf den nach der Hydrierung (Schritt b) erhaltenen Pfropfkern wird mindestens eine Pfropfschale aufgepfropft.

Die Pfropfschale ist zu einem Anteil von 10 bis 70 Gew.-%, bevorzugt von 20 bis 60 Gew.-%, besonders bevorzugt von 25 bis 50 Gew.-%, wobei die Summe aus Pfropfkern und Pfropfschale 100 Gew.-%, bezogen auf den Pfropfkautschuk, enthalten.

### Momomere

Die Pfropfschale wird erhalten durch Polymerisation eines Monomerengemisches, bezogen auf den Gewichtsanteil der Pfropfschale, aus
- 10 bis 100 Gew.-%, bevorzugt 60 bis 95 Gew.-%, besonders bevorzugt 65 bis 85 Gew.-% einer Styrolverbindung der allgemeinen Formel I 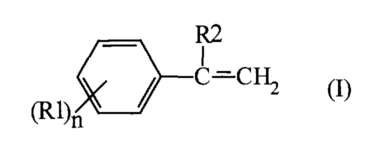 in der R¹ und R² für Wasserstoff oder C₁- bis C₈-Alkyl und n für 0, 1,2 oder 3 stehen,
- 0 bis 90 Gew.-%, bevorzugt 0 bis 40 Gew.-%, besonders bevorzugt 5 bis 35 Gew.-% mindestens einer monoethylenisch ungesättigten Nitrilverbindung oder (Meth)acrylaten, und
- 0 bis 40 Gew.-%, bevorzugt 0,5 bis 20 Gew.-% eines oder mehrerer weiterer Monomere, und
- 0 bis 5 Gew.-% mindestens eines Vernetzers und/oder Regler.

In einer bevorzugten Ausführungsform der vorliegenden Erfindung wird die Propfschale durch Polymerisation eines Monomerengemisches erhalten aus, bezogen auf den Gewichtsanteil der Pfropfschale,
- 60 bis 90 Gew.-% Styrol, und
- 10 bis 40 Gew.-% Acrylnitril.

In einer weiteren bevorzugten Ausführungsform wird die Propfschale durch Polymerisation eines Monomergemisches erhalten, aus, bezogen auf den Gewichtsanteil der Pfropfschale,
- 10 bis 80 Gew.-%, besonders bevorzugt 20 Gew.% Styrol, und
- 20 bis 90 Gew.-%, besonders bevorzugt 80 Gew.-% Methylmethacrylat.

### Styrolverbindung

Als Styrolverbindung der allgemeinen Formel I setzt man bevorzugt Styrol, α-Methylstyrol sowie außerdem mit C₁- bis C₈-Alkyl kernalkylierte Styrole wie p-Methylstyrol oder tert.-Butylstyrol, ein. Styrol ist besonders bevorzugt.

### Monoethylenisch ungesättigte Nitrilverbindung und/oder (Meth)acrylate

Als monoethylenisch ungesättigte Nitrilverbindung kommen Acrylnitril, Methacrylnitril und deren Mischungen in Betracht, besonders bevorzugt ist Acrylnitril. Als (Meth)acrylate sind C₁- bis C₈-Acrylate und C₁- bis C₈-Methacrylate geeignet.

### Weitere Comonomere

Weiterhin kann die Pfropfschale auf Kosten der Styrolmonomeren und der monoethylenisch ungesättigten Nitrilverbindungen und /oder (Meth)acrylate aus weiteren Comonomeren aufgebaut sein. Diese weiteren Comonomeren können ausgewählt sein aus Acrylsäure, Methacrylsäure, weiterhin Dicarbonsäuren wie Maleinsäure und Fumarsäure sowie deren Anhydriden wie Maleinsäureanhydrid, N-substituierten Maleinimiden wie N-Methyl-, N-Phenyl- und N-Cyclohexylmaleinimid, Stickstoff-funktionellen Monomeren wie Dimethylaminoethylacrylat, Diethylaminoethylacrylat, Vinylimidazol, Vinylpyrrolidin, Vinylcaprolactam, Vinylcarbazol, Vinylanilin, Acrylamid, C₁- bis C₄-Alkylestern der Methacrylsäure wie Methylmethacrylat, Ethylmethacrylat, n-Propylmethacrylat, i-Propylmethacrylat, n-Butylmethacrylat, Isobutylmethacrylat, sek.-Butylmethacrylat, tert.-Butylmethacrylat und Hydroxyethylacrylat, aromatischen und araliphatischen Estern der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat, ungesättigten Ethern wie Vinylmethylether sowie Mischungen dieser Monomere. Bevorzugt sind Maleinsäureanhydrid sowie N-substituierte Maleinimide wie N-Methyl-, N-Phenyl- und N-Cyclohexylmaleinimid.

### Vernetzer

Geeignete Vernetzer sind Vernetzer, die wenigstens zwei nicht-konjugierte, ethylenisch ungesättigte Doppelbindungen aufweisen. Geeignete Monomere mit wenigstens zwei nicht-konjugierten, ethylenisch ungesättigten Doppelbindungen sind ausgewählt aus Diestern zweiwertiger Alkohole mit ethylenisch ungesättigten Monocarbonsäuren, z.B. Alkylenglycoldiacrylate und Dimethacrylate wie Ethylenglycoldi(meth)acrylat, 1,3-Butylenglycoldi(meth)acrylat, 1,4-Butylenglycoldi(meth)acrylat, Propylenglycoldi(meth)acrylat sowie Divinylbenzol, Vinylmethacrylat, Vinylacrylat, Allylmethacrylat, Allylacrylat, Diallylmaleat, Diallylfumarat, Diallylphthalat, Methylenbisacrylamid, Dihydrodicyclopentadienylacrylat und -methacrylat, N,N'-Divinylimidazolin-2-on und Triallylcyanurat.

Besonders bevorzugt eingesetzte Vernetzer sind Acrylsäure, Methacrylsäure, Itaconsäure, Acrylamid, Methacrylamid, N-Methylolacrylamid und/oder N-Methylolmethacrylamid.

Bevorzugt ist die Pfropfhülle aus Styrol aufgebaut, oder aus einer Mischung aus 60 bis 90 Gew.-% Styrol und dem Rest Acrylnitril oder aus 10 bis 30 Gew.-% Styrol und 70 bis 90 Gew.-% Methylmethacrylat.

### Herstellung der Pfropfpolymerisate

Die Herstellung der Pfropfhülle kann unter den gleichen Bedingungen wie die Herstellung des kautschukelastischen Polymerisats (Schritt a) erfolgen, wobei man die Schale in einem oder mehreren Verfahrensschritten herstellen kann. Beispielsweise kann man zunächst Styrol bzw. α-Methylstyrol allein und danach Styrol und Acrylnitril in zwei aufeinanderfolgenden Schritten polymerisieren.

Die Pfropfpolymerisate sind in an sich bekannter Weise erhältlich, bevorzugt durch Emulsionspolymerisation bei 30 bis 80°C. Hierfür eignen sich als Emulgatoren beispielsweise Alkalimetallsalze von Alkyl- oder Alkylarylsulfonsäuren, Alkylsulfate, Fettalkoholsulfate, Salze höherer Fettsäuren mit 10 bis 30 Kohlenstoffatomen, Sulfosuccinate, Ethersulfonate oder Harzseifen. Bevorzugt werden die Alkalimetallsalze von Alkylsulfonaten oder Fettsäuren mit 10 bis 18 Kohlenstoffatomen eingesetzt.

Bevorzugt verwendet man zur Herstellung der Dispersion soviel Wasser, daß die fertige Dispersion einen Feststoffgehalt von 20 bis 60 Gew.-% hat.

Als Polymerisationsinitiatoren kommen bevorzugt Radikalbildner, z.B. Peroxide wie bevorzugt Peroxosulfate wie Kaliumperoxodisulfat und Azoverbindungen wie Azobisisobutyronitril in Betracht. Es können jedoch auch Redoxsysteme, insbesondere solche auf Basis von Hydrogenperoxiden wie Cumolhydroperoxid, eingesetzt werden. Ferner kann man Molekulargewichtsregler wie Ethylhexylthioglycolat, t-Dodecylmercaptan, Terpinole und dimeres α-Methylstyrol mitverwenden.

Zur Einhaltung eines konstant bleibenden pH-Wertes, der bevorzugt bei 6 bis 9 liegt, kann man Puffersubstanzen wie Na₂HPO₄/NaH₂PO₄ oder Natriumhydrogencarbonat mitverwenden.

Emulgatoren, Initiatoren, Regler und Puffersubstanzen werden in den üblichen Mengen eingesetzt, so daß sich nähere Angaben hierzu erübrigen.

Weitere Einzelheiten zur Herstellung von Pfropfpolymerisaten sind in DE-OS 12 60 135 und DE-OS 31 49 358 beschrieben.

Vorzugsweise stimmt man die Reaktionsbedingungen aufeinander ab, in an sich bekannter Weise, daß die partikelförmigen Pfropfpolymerisate einen Durchmesser d₅₀ im Bereich von 60 bis 1500, bevorzugt von 90 bis 1000 und besonders bevorzugt von 30 bis 700 nm haben.

Die Pfropfpolymerisate können auch aus mehreren "harten" und "weichen" Schalen bestehen, wobei auf einen Pfropfkern ("weich") z.B. eine Pfropfhülle ("hart") und wiederum ein Pfropfkern und eine weitere Pfropfhülle folgen oder die Monomere der Pfropfhülle einen inneren Kern bilden, worauf der Pfropfkern und wiederum die Pfropfhülle folgen.

Ein weiterer Gegenstand der vorliegenden Erfindung ist ein Pfropfkautschuk herstellbar nach dem erfindungsgemäßen Verfahren. Dieser Pfropfkautschuk zeichnet sich gegenüber anderen auf Dien-Basis hergestellten Pfropfkautschuken durch eine hohe Beständigkeit gegenüber Umwelteinflüssen wie Lichtbeständigkeit und Temperaturbeständigkeit aus.

Der erfindungsgemäße Pfropfkautschuk ist insbesondere geeignet zur Verwendung als Schlagzähmodifier in thermoplastischen Abmischungen. Dabei sind unter thermoplastischen Abmischungen Abmischungen des erfindungsgemäßen Pfropfkautschuks mit thermoplastischen Polymeren zu verstehen. Diese thermoplastischen Polymere (Hartkomponenten) werden im allgemeinen separat hergestellt und das erfindungsgemäße Pfropfpolymerisat wird als Schlagzähmodifier zugemischt.

Ein weiterer Gegenstand der vorliegenden Erfindung sind daher Abmischungen, enthaltend
a) 2 bis 70 Gew.-% eines erfindungsgemäßen Pfropfkautschuks als Komponente A,
b) 30 bis 98 Gew.-% eines thermoplastischen Polymeren oder einer Mischung verschiedener thermoplastischer Polymere, als Komponente B,
c) 0 bis 50 Gew.-% weiterer Zusatzstoffe als Komponente C, wobei die Summe der Komponenten A bis C 100 Gew.-%, bezogen auf die Abmischung, beträgt.

### Komponente B

Geeignet sind alle thermoplastisch verarbeitbaren Kunststoffe beziehungsweise deren Mischungen. Bevorzugt geeignete thermoplastische Polymere sind ausgewählt aus Acrylnitril-Butadien-Styrol (ABS), Acrylnitril-Styrol-Acrylsäureester (ASA), Polybutylen- oder -ethylen-terephthalat (PBT oder PET), Polyvinylchlorid (PVC), Polystyrolacrylnitril (SAN) und/oder Methylmethacrylat-ABS (MABS), Polypropylen (PP), Polycarbonaten (PC), Polystyrol (PS), Polymethylmethacrylat (PMMA), Polyoxymethylen (POM), Polyamiden (PA), Polyethylen, thermoplastischen Urethanen. (TPU) sowie den Mischungen PC/SAN, PBT/SAN, PA/SAN, SAN/PMMA/ggf. PC und PA/ABS. Bevorzugt sind SAN, PC/SAN, PA/SAN, PA/ABS.

Diese thermoplastischen Polymere können nach dem Fachmann bekannten Verfahren erhalten werden, z.B. durch Polymerisation in Masse, Lösung, Suspension oder Emulsion.

### Komponente C

Weitere Zusatzstoffe sind übliche Zusatzstoffe wie Pigmente, Farbstoffe, Füllstoffe, Flammschutzmittel, verträgliche weitere Polymere, Antistatika, Antioxidantien, Entformungshilfsmittel und Gleitmittel.

### Herstellverfahren der Abmischungen

Die erfindungsgemäßen Abmischungen können hergestellt werden, indem man die Komponenten A bis C bei Temperaturen von 100 bis 350 °C unter Aufschmelzen in einer Mischvorrichtung vermischt. Dabei ist es auch möglich, zunächst zwei Komponenten zu mischen und anschließend gegebenenfalls weitere Komponenten nach und nach zuzugeben. Üblicherweise erfolgt die Herstellung der Abmischungen in einem Extruder oder Kneter.

Die erfindungsgemäßen Abmischungen werden zur Herstellung von Formkörpern, Folien und Fasern verwendet. Die Abmischungen eignen sich aufgrund ihrer hervorragenden Stabilität gegenüber Umwelteinflüssen insbesondere für eine Anwendung im Außenbereich.

Die nachfolgenden Beispiele erläutern die Erfindung zusätzlich.

### Beispiele

### 1. Herstellung der kautschukelastischen Polymerisate

### a) Herstellung des kautschukelastischen Polymerisats (A1a)

In einem für 10 atü ausgelegten V2A-Stahlkessel mit Blattrührer wurden die folgenden Substanzen vorgelegt:

| | |
|---|---|
| 150 Gew.-Teile | Wasser |
| 1,2 Gew.-Teile | Natriumalkyl-(C12-C16)sulfonat (K30, Bayer AG) |
| 0,3 Gew.-Teile | Kaliumpersulfat |
| 0,3 Gew.-Teile | Natriumbicarbonat |
| 0,15 Gew.-Teile | Natriumpyrophosphat |

Zur Entfernung von vorhandenem Sauerstoff wurde der Kessel zweimal mit Stickstoff gespült und die Lösung anschließend in Stickstoffatmosphäre auf 65 °C erhitzt. Im Anschluß daran wurden der Lösung 0,5 Gew.-Teile tert.-Dodecylmercaptan und 16,6 Gew.-Teile Butadien zugeführt. Eine Stunde nach Polymerisationsbeginn wurden weitere 83,3 Gew.-Teile Butadien innerhalb von 5 Stunden zudosiert. 5 Stunden nach Beendigung der Butadienzugabe, d.h. nach insgesamt 11 Stunden wurden nochmals 0,5 Teile tert.-Dodecylmercaptan zugegeben. Nach einer Reaktionszeit von insgesamt 19 Stunden wurde bei einem Umsatz von 96% eine Polybutadien-Emulsion mit einem Feststoffgehalt von 39,2%, bezogen auf die Emulsion, erhalten. Der Polybutadien-Latex hatte eine mittlere Teilchengröße von 0,08 µm (d₅₀-Wert der integralen Massenverteilung, bestimmt mittels Ultrazentrifuge). Die Dispersion wird mit 150 Gew.-Teilen Wasser und 0,8 Teilen Seife auf 25% verdünnt.

### b) Herstellung des kautschukelastischen Polymerisats (A1b)

In einem 141 Reaktor werden die folgenden Substanzen vorgelegt:

| | |
|---|---|
| 0,28 kg | einer Polystyrol-Saat (Teilchengröße 29 mm, gemessen mit statischer Lichtstreuung) |
| 7,2 1 | Wasser |
| 0,0096 kg | Natriumhydrogensulfat |
| 0,019 kg | Kaliumpersulfat |
| 0,01 kg | Texapon® NSO IS (von Henkel KGaA) |
| 0,0053 kg | Natriumpyrophosphat |
| 10 Gew.-% | eines Zulaufs der folgenden Zusammensetzung |

| Zulauf | |
|---|---|
| 2,2 kg | Butadien |
| 0,55 kg | Styrol |
| 0,04 kg | K30 (Seife) |
| 0,04 kg | Texapon® NSO IS (von Henkel KGaA) |
| 0,243 kg | Wasser |

Die Vorlage wurde in Stickstoffatmosphäre auf 67 °C erhitzt. Anschließend wurde der Reaktionsmischung der restliche Zulauf innerhalb von 5 Stunden zugeführt. Im Anschluß ließ man die Reaktionsmischung 10 Stunden nachreagieren. Es wurde eine Polybutadien-Emulsion mit einem Feststoffgehalt von 25%, bezogen auf die Emulsion, erhalten.

### c) Herstellung des kautschukelastischen Polymerisats (A1c)

In einem 141 Reaktor werden die folgenden Substanzen vorgelegt:

| | |
|---|---|
| 0,28 kg | einer Polystyrol-Saat (Teilchengröße 29 mm, gemessen mit statischer Lichtstreuung) |
| 7,2 1 | Wasser |
| 0,0096 kg | Natriumhydrogensulfat |
| 0,019 kg | Kaliumpersulfat |
| 0,01 kg | Texapon® NSO IS (von Henkel KGaA) |
| 0,0053 kg | Natriumpyrophosphat |
| 10 Gew.-% | eines Zulaufs der folgenden Zusammensetzung |

| Zulauf | |
|---|---|
| 2,8 kg | Butadien |
| 0,04 kg | K30 (Seife) |
| 0,04 kg | Texapon® NSO IS (von Henkel KGaA) |
| 0,243 kg | Wasser |

Die Vorlage wurde in Stickstoffatmosphäre auf 67 °C erhitzt. Anschließend wurde der Reaktionsmischung der restliche Zulauf innerhalb von 5 Stunden zugeführt. Im Anschluß ließ man die Reaktionsmischung 10 Stunden nachreagieren. Es wurde eine Polybutadien-Emulsion mit einem Feststoffgehalt von 25%, bezogen auf die Emulsion, erhalten.

### 2. Herstellung der hydrierten Pfropfgrundlage (Hydrierung der kautschukelastischen Polymerisate)

### a) Hydrierung des kautschukelastischen Polymerisats, Herstellung der hydrierten Pfropfgrundlage (A2a)

### a1) Herstellung der Katalysatorlösung

In einem Autoklaven mit einem Volumen von 0,3 1 legte man unter Argonatmosphäre 100 g Toluol, 5,0 g Ruthenium(III)tris-2,4-pentandionat und 10,15 g Tris-n-butylphosphin vor. Anschließend gab man bei Raumtemperatur 5 bar Wasserstoffdruck auf den Autoklaven, erwärmte auf 100 °C und erhöhte den Wasserstoffdruck auf 10 bar. Wasserstoffdruck und Temperatur behielt man 2 Stunden bei, kühlte die Reaktionsmischung dann ab und überführte sie in ein inertes Vorratsgefäß.

### a2) Hydrierung

Unter Inertgasbedingungen gab man 45,4 g der gemäß a1) hergestellten Katalysatorlösung unter intensiver Durchmischung zu 1 kg der Dispersion des kautschukelastischen Polymerisats Ala. Diese Mischung überführte man in einen Autoklaven mit einem Volumen von 2,5 1, der zuvor durch mehrfaches Evakuieren und Befüllen mit Stickstoff inertisiert war. Dann gab man bei Raumtemperatur 10 bar Wasserstoff auf den Autoklaven, erwärmte auf 150 °C und erhöhte dann den Wasserstoffdruck auf 280 bar. Wasserstoffdruck und Temperatur wurden 15 Stunden lang beibehalten. Der Hydriergrad der Doppelbindungen wurde mittels IR-Spektroskopie zu 96% bestimmt.

### b) Hydrierung des kautschukelastischen Polymerisats, Herstellung der hydrierten Pfropfgrundlage (A2b)

### b1) Herstellung der Katalysatorlösung

Die eingesetzte Katalysatorlösung und deren Herstellung entspricht der unter a1) hergestellten Katalysatorlösung.

### b2) Hydrierung

Die Herstellung der hydrierten Pfropfgrundlage (A2b) erfolgt analog zur unter a2) beschriebenen Herstellung der hydrierten Pfropfgrundlage (A2a). Der Hydriergrad der Doppelbindungen wurde mittels IR-Spektroskopie zu 86% bestimmt.

### c) Hydrierung des kautschukelastischen Polymerisats, Herstellung der hydrierten Pfropfgrundlage (A2c)

### c1) Herstellung der Katalysatorlösung

Die eingesetzte Katalysatorlösung und deren Herstellung entspricht der unter a1) hergestellten Katalysatorlösung.

### c2) Hydrierung

Die Herstellung der hydrierten Pfropfgrundlage (A2c) erfolgt analog zur unter a2) beschriebenen Herstellung der hydrierten Pfropfgrundlage (A2a). Der Hydriergrad der Doppelbindungen wurde mittels IR-Spektroskopie zu 95% bestimmt.

### 3. Herstellung der Pfropfpolymerisate (Pfropfen der hydrierten Pfropfgrundlage) (Beispiele 1, 2 und 3)

### a) Pfropfen des hydrierten kautschukelastischen Polymerisats, Herstellung des erfindungsgemäßen Pfropfpolymerisats (A3a) (Beispiel 1)

150 Teile des Latex der hydrierten Pfropfgrundlage (A2a) wurden mit 40 Teilen einer Mischung aus Styrol und Acrylnitril (Verhältnis 70 : 30) und 110 Teilen Wasser gemischt und unter Rühren nach Zusatz von 0,03 Teilen Kaliumpersulfat und 0,05 Teilen Lauroylperoxid 4 Stunden auf 65 °C erhitzt. Das bei der Pfropfmischpolymerisation erhaltene Polymerisationsprodukt wurde dann mittels einer Magnesiumsulfatlösung bei 95 °C aus der Dispersion ausgefällt, abgetrennt, mit Wasser gewaschen und im warmem Luftstrom getrocknet.

### b) Pfropfen des hydrierten kautschukelastischen Polymerisats, Herstellung des erfindungsgemäßen Pfropfpolymerisats (A3b) (Beispiel 2)

Das Pfropfen der hydrierten Pfropfgrundlage (A2b) erfolgt analog zum Pfropfen der hydrierten Pfropfgrundlage (A2a) (3a)).

### c) Pfropfen des hydrierten kautschukelastischen Polymerisats, Herstellung des erfindungsgemäßen Pfropfpolymerisats (A3c) (Beispiel 3)

Das Pfropfen der hydrierten Pfropfgrundlage (A2c) erfolgt analog zum Pfropfen der hydrierten Pfropfgrundlage (A2a) (3a)).

### Vergleichsbeispiele (Vergleichsbeispiele 4 bis 6)

### a) Pfropfen des kautschukelastischen Polymerisats (A1a) ohne vorhergehende Hydrierung (Vergleichsbeispiel 4)

Das kautschukelastische Polymerisat (A1a) wird ohne vorhergehende Hydrierung gepfropft, wobei das Pfropfen des nicht hydrierten kautschukelastischen Polymerisats (A1a) analog zum Pfropfen des hydrierten kautschukelastischen Polymerisats (hydrierte Pfropfgrundlage (A2a) erfolgt.

### b) Pfropfen des kautschukelastischen Polymerisats (A1b) ohne vorhergehende Hydrierung (Vergleichsbeispiel 5)

Das kautschukelastische Polymerisat (A1b) wird ohne vorhergehende Hydrierung gepfropft, wobei das Pfropfen des nicht hydrierten kautschukelastischen Polymerisats (A1b) analog zum Pfropfen des hydrierten kautschukelastischen Polymerisats (hydrierte Pfropfgrundlage (A2b) erfolgt.

### c) Pfropfen des kautschukelastischen Polymerisats (A1c) ohne vorhergehende Hydrierung (Vergleichsbeispiel 6)

Das kautschukelastische Polymerisat (A1c) wird ohne vorhergehende Hydrierung gepfropft, wobei das Pfropfen des nicht hydrierten kautschukelastischen Polymerisats (A1c) analog zum Pfropfen des hydrierten kautschukelastischen Polymerisats (hydrierte Pfropfgrundlage (A2c) erfolgt.

Die Eigenfarbe der (teil)hydrierten Pfropfkautschuke ist nach Fällung mit einer 2%-igen MgSO₄-Lösung und anschließender Trocknung für 24 Stunden bei 80 °C deutlich heller als die Eigenfarbe der nicht hydrierten Pfropfkautschuke.

### Weiterverarbeitung/Abmischungen mit SAN (Poly(styrol-(o-acrylnitril))

Die Pfropfkautschuke wurden mit einer 2%-igen MgSO₄-Lösung gefällt und anschließend 24 Stunden bei 80 °C getrocknet. Die getrockneten Pfropfkautschuke wurden anschließend bei 250 °C mit SAN (33 Gew.-% Acrylnitril) vermischt und zu Granulat verarbeitet. Das Granulat wurde einer Wärmelagerung bei 110 °C unterworfen bzw. auf einer Spritzgußmaschine zu Normkleinstäben verspritzt (50 x 6 x 4 mm). Die mechanische Werte der Formkörper gemäß der Norm DIN 53455 bestimmt. Tabelle 1 zeigt eine Auflistung mechanischer Werte ausgewählter Abmischungen und Tabelle 2 zeigt eine Farbbeurteilung nach Wärmelagerung bei 110°C.

**Tabelle 1**

| Pfropfkautschuk Gew.-% | Gew.-% SAN | Zugspannung [MPa]¹⁾ | Vicat B [°C]²⁾ |
|---|---|---|---|
| Beispiel 1 (A3a) 46 | 54 | 33,3 | 92,3 |
| Vergleichsbeispiel 4 46 | 54 | 22,5 | 90,6 |

| | | | |
|---|---|---|---|
| 1) Die Zugspannung wird bestimmt gemäß DIN 53455 | | | |
| 2) Die Vicat B wird bestimmt gemäß VST/B ISO 306 | | | |

**Tabelle 2**

| Pfropfkautschuk Gew.-% | Gew.-% SAN | Farbveränderung nach 288h |
|---|---|---|
| Beispiel 2 (A3b) 58 | 42 | ++¹⁾ |
| Vergleichsbeispiel 5 58 | 42 | --²⁾ |
| Beispiel 3 (A3c) 46 | 54 | ++ |
| Vergleichsbeispiel 6 46 | 54 | -- |

| | | |
|---|---|---|
| 1) nur geringe Farbveränderung + + | | |
| 2) sehr starke Farbveränderung -- | | |

## Patentansprüche

1. Verfahren zur Herstellung von Pfropfkautschuken, aufgebaut aus mindestens einem Pfropfkern und mindestens einer Pfropfschale, umfassend
a) Herstellung einer wäßrigen Dispersion mindestens eines kautschukelastischen Polymerisats aufgebaut aus
• mindestens einem konjugierten Dien,
• gegebenenfalls mindestens einem mit dem Dien copolymerisierbaren Monomer,
• gegebenenfalls mindestens einem modifizierenden Monomer,
b) anschließende selektive Hydrierung von ethylenisch ungesättigten Doppelbindungen in dem kautschukelastischen Polymerisat mit Wasserstoff in Gegenwart mindestens eines Hydrierkatalysators, ausgewählt aus Salzen und Komplexverbindungen des Rhodiums und/oder Rutheniums, wobei die wäßrige Dispersion des kautschukelastischen Polymerisats nicht mehr als 20 Vol.-% eines organischen Lösungsmittels enthält, zur Gewinnung des mindestens einen Pfropfkerns, und
c) Aufpfropfen mindestens einer Pfropfschale auf den Pfropfkern aufgebaut aus
• mindestens einer Styrolverbindung der allgemeinen Formel I 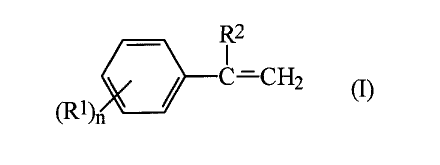 in der R¹ und R² für Wasserstoff oder C₁- bis C₈-Alkyl und n für 0, 1, 2 oder 3 stehen,
• gegebenenfalls mindestens einer monoethylenisch ungesättigten Nitrilverbindung, und
• gegebenenfalls mindestens einem weiteren Monomer.

2. Verfahren nach Anspruch 1, **dadurch gekennzeichnet, daß** der kautschukelastische Pfropfkern zu einem Anteil von 30 bis 90 Gew.-% in dem Pfropfkauschuk enthalten ist und die Pfropfschale zu einem Anteil von 10 bis 70 Gew.-%, wobei die Summe aus Pfropfkern und Pfropfschale 100 Gew.-%, bezogen auf den Pfropfkautschuk, ergibt und sich der Pfropfkern und die Pfropfschale aus mehreren Pfropfkernen und Pfropfschalen zusammensetzen können.

3. Verfahren nach Anspruch 1 oder 2, **dadurch gekennzeichnet, daß** das kautschukelastische Polymerisat aufgebaut ist aus den Komponenten:
• 10 bis 100 Gew.-% mindestens eines konjugierten Diens,
• 5 bis 80 Gew.-% mindestens eines mit dem Dien copolymerisierbaren Monomers, und
• 0 bis 20 Gew.-% mindestens eines modifizierenden Monomers,
wobei die Summe der Komponenten 100 Gew.-%, bezogen auf das kautschukelastische Polymerisat, ergibt.

4. Verfahren nach einem der Ansprüche 1 bis 3, **dadurch gekennzeichnet, daß** das konjugierte Dien ausgewählt ist aus Butadien und Isopren.

5. Verfahren nach einem der Ansprüche 1 bis 4, **dadurch gekennzeichnet, daß** dem Hydrierkatalysator phosphorenthaltende Verbindungen zugesetzt werden, die eine koordinative Bindung mit den Salzen oder Komplexverbindungen des Rutheniums und/oder Rhodiums ausbilden können.

6. Verfahren nach Anspruch 5, **dadurch gekennzeichnet, daß** die phosphorenthaltenden Verbindungen ausgewählt sind aus Verbindungen der allgemeinen Formeln PR₃ und R₂P-A-PR₂, worin die Reste R gleich oder verschieden sein können und unabhängig voneinander Alkyl, Cycloalkyl, Aryl, Alkyloxy, Cycloalkyloxy, Aryloxy oder Fluor bedeuten und A ein bivalenter Kohlenwasserstoffrest ist.

7. Verfahren nach einem der Ansprüche 1 bis 6, **dadurch gekennzeichnet, daß** als Hydrierkatalysator eine Komplexverbindung des Rutheniums eingesetzt wird.

8. Verfahren nach einem der Ansprüche 1 bis 7, **dadurch gekennzeichnet, daß** der Hydrierkatalysator in einer Menge von 1 bis 1000 ppm, bezogen auf das Gesamtgewicht der wäßrigen Dispersion, einsetzt.

9. Verfahren nach einem der Ansprüche 1 bis 8, **dadurch gekennzeichnet, daß** die Pfropfschale aufgebaut ist aus folgenden Komponenten:
• 10 bis 100 Gew.-% mindestens einer Styrolverbindung der allgemeinen Formel I,
• 0 bis 90 Gew.-% mindestens einer monoethylenisch ungesättigten Nitrilverbindung und/oder (Meth)acrylaten, und
• 0 bis 40 Gew.-% mindestens eines weiteren Monomers,
• 0 bis 5 Gew.-% mindestens eines Vernetzers und/oder Reglers,
*wobei die Summe der Komponenten 100 Gew*.*-%*, *bezogen auf die Pfropfschale*, *ergibt.*

10. Pfropfkautschuk herstellbar nach einem Verfahren der Ansprüche 1 bis 9.

11. Verwendung eines Pfropfkautschuks nach Anspruch 10 als Schlagzähmodifier in thermoplastischen Abmischungen.

12. Abmischungen, enthaltend
a) 2 bis 70 Gew.-% eines Pfropfkautschuks gemäß Anspruch 10 als Komponente A,
b) 30 bis 98 Gew.-% eines thermoplastischen Polymeren oder einer Mischung verschiedener thermoplastischer Polymere, als Komponente B,
c) 0 bis 50 Gew.-% weiterer Zusatzstoffe als Komponente C,
*wobei die Summe der Komponenten A bis C 100 Gew*.*-%*, *bezogen auf die Abmischung*, *beträgt*.

13. Verfahren zur Herstellung von Abmischungen nach Anspruch 12, **dadurch gekennzeichnet, daß** man die Komponenten A bis C bei Temperaturen von 100 bis 350 °C unter Aufschmelzen in einer Mischvorrichtung vermischt.

14. Verwendung von Abmischungen nach Anspruch 12 zur Herstellung von Formkörpern, Folien und Fasern.
